# EUROPÄISCHE PATENTANMELDUNG

(11) **EP 1 520 549 A2**
(43) Veröffentlichungstag der Anmeldung: **06.04.2005**
(21) Anmeldenummer: 04021869.5
(22) Anmeldetag: 15.09.2004
(51) Int. Cl.: A61C 13/08, A61C 13/00, A61K 6/00

(54) **Verfahren und Farbkit zur Farbkorrektur von Zahnersatz oder natürlichen Zähnen**

(30) Priorität: 02.10.2003 DE 10346465
(71) Anmelder: Heraeus Kulzer GmbH, 63450 Hanau (DE)
(72) Erfinder: Grundler, Andreas, 42117 Wuppertal (DE); Erdrich, Albert, Dr., 61231 Bad Nauheim (DE); Hohmann, Alfred, 61389 Schmitten (DE)
(74) Vertreter: Kühn, Hans-Christian

(57) **Zusammenfassung**

Ein Verfahren zur Farbkorrektur von Zahnersatz oder Zahnoberflächen durch Auftragen lichthärtender Korrekturfarben für die Zahngrundfarben wird zweckmäßig mit einem Farbkit durchgeführt, das folgende Komponenten umfasst:
1 Korrekturfarbe für die Vita Shades A,
1 Korrekturfarbe für die Vita Shades B,
1 Korrekturfarbe für die Vita Shades C,
1 Korrekturfarbe für die Vita Shades D,
1 orangene Korrekturfarbe zur Individualisierung der Vita Shades im rot/gelben Farbbereich,
1 blaue Korrekturfarbe zur Individualisierung der Vita Shades im blau/grünen Farbbereich,
1 weisse Korrekturfarbe zur Individualisierung der Vita Shades bezüglich Helligkeit und Transparenz,
1 transparenter Verdünnungslack zum Abstimmen der Farbintensität
sowie optional
1 schwarze Korrekturfarbe zur Individualisierung der Vita Shades bezüglich Helligkeit
1 Farbschlüssel mit Mischanleitung und Erläuterung der Korrekturmöglichkeiten, nötiges Werkzeug wie Mischplatte, Messpipette, Pinsel.

## Beschreibung

Die Erfindung betrifft ein Verfahren und ein Farbkit zur Farbkorrektur von allen Arten von Zahnersatz (z.B. Veneers, Kronen, Brücken, Prothesenzähnen, Füllungen, Inlays usw.), die aus den verschiedensten im Dentalbereich gebräuchlichen Materialien hergestellt werden sein können (z.B. Komposite, Keramik, Kunstoff) und von natürlichen Zähnen.

Es gibt eine Reihe von Farbsystemen und Farbschlüsseln, die dem Zahntechniker die Anpassung des von ihm gefertigten Zahnersatzes an die natürlich vorgegebene Zahnfarbe des Patienten erleichtern. Dazu zählt das wohl bekannteste System, der 16 Farben umfassende sogenannte Vita® -Farbschlüssel (Vita® Lumin-Shade Guide). In diesem System sind die Farbgruppen A (rot-braun: Farben: A1, A2, A3, A3.5, A4) B (rot-gelb: Farben B1, B2, B3, B4), C (grau: Farben C1, C2, C3, C4) und D (rotgrau: Farben D2, D3, D4) in verschiedener Intensität vertreten.

Nach Sichtbestimmung von Helligkeit und Farbintensität wird der Farbton ebenfalls nach Sicht ausgewählt und das Zahnlabor mit der Herstellung des Zahnersatzes beauftragt. Die Farbtönung wird bei Vita in 4 Gruppen A, B, C und D eingeteilt, die wiederum in verschiedene Intensitäten aufgeteilt sind.

Es kann immer vorkommen, dass nach Fertigstellung des Zahnersatzes die Farbe doch nicht ganz passt und Korrekturbedarf besteht.

Zur Korrektur solcher Fehler sind für Keramikkörper bereits Verfahren und Systeme bekannt: DE 195 04 31 A1 empfiehlt Anätzen der Keramik und Überziehen mit einer dünnflüssigen, härtbaren Zahnfarbe. DE 31 25 924 A1 betrifft die Farbkorrektur von Keramik ohne Vorbehandlung der Oberfläche mit Hilfe von vorzugsweise Nagellack und anschließendes Glasieren. In DE 43 40 352 A1 wird das Aufbringen einer Verblendschicht beschrieben. DE 101 26 968 A1 betrifft ein Farbkit für die Herstellung und Einfärbung des Zahnfleischteils von Zahnprothesen.

Erfindungsgemäß wird im Vorliegenden ein Verfahren zur Farbkorrektur von Zahnersatz oder natürlichen Zähnen vorgeschlagen, das die Farbkorrektur ausgehend von gängigen Grundfarben ermöglicht. Dazu werden in einer bevorzugten Ausführungsform Korrekturfarben für die Vita -Grundfarben A, B, C und D bereitgestellt. Diese können dann durch Verdünnung der Intensität zur Erzeugung von Zwischentönungen verwendet werden. Bevorzugt sind zusätzlich drei Korrekturlacke für die Farbrichtungen orange, weiß und blau sowie zusätzlich schwarz zur Beeinflussung der Helligkeit. Die Korrekturlacke ermöglichen ausgehend von der jeweiligen Grundfarbe Korrekturen in Richtung orange, weiß oder blau. Damit werden die Farbschattierungen menschlicher Gebisse lückenlos abgedeckt. Die Lacke können durch transparente Verdünnung in der Intensität stufenlos eingestellt werden. Das wird zweckmäßig mit einem Transparentlack erreicht. Beispielhafte Ausgestaltungen finden sich in den weiter unten beschriebenen Farbkits.

Es ist selbstverständlich möglich, das Verfahren auf andere Farbsysteme als das beispielhaft verwendete Vita-System anzuwenden. Dazu werden gegebenenfalls die Farbkorrekturtöne oder die Anzahl der Korrekturfarben verändert.

Das Verfahren eignet sich für alle Arten von Zahnersatz wie Kronen oder Kunstzähne, aber auch für natürliche Zähne oder Zahnoberflächen. Eine Lackierung in Richtung hochweiß kann z.B. ein Bleichen der Zähne ersetzen. Vor der Applikation der Korrekturfarbe wird die Oberfläche des zu korrigierenden Zahns zweckmäßig in üblicher Weise vorbereitet, z.B. durch Anätzen, Anschleifen und/oder Aufbringen von Haftvermittlern.

### Geeignete Lacke sollten folgende Anforderungen erfüllen:

Es sollte sich um ein lichthärtbares Überzugsmaterial handeln, das fließfähig ist, eine pastenartige oder lackartige Konsistenz hat, mit dem Pinsel auftragbar ist, nach dem Härten eine glatte und glänzende Oberfläche ausbildet, und schließlich eine abrasionsstabile Beschichtung auf einer Zahnoberfläche oder einer Zahnersatzoberfläche ergibt, die einen gewünschten Farbeindruck beim Betrachter hervorruft.

Bevorzugt enthalten solche Materialien
(A) 40 - 60 Gew.% Matrixmonomer(e)
(B) 60 - 40 Gew.% Füllstoffmischung aus Quarz
(C) 0.1 - 1 Gew.% (Photo)Initiator
(D) geringe Mengen Dentalpigmente.

Die Matrixmonomere sind vorzugsweise übliche Dentalmonomere, z.B. eine Mischung von Bisphenol-A-diglycidilacrylate, Urethandimethacrylat und Triethylenglycoldimethacrylat.

Die Füllstoffmischung aus Quarz kann bevorzugt eine Mischung aus Quarz und Quarz enthaltendem Splitterpolymer sein.
Das Splitterpolymer kann z.B. Quarz/Polydodecandioldimethacrylat sein.

Die Quarz-Füllstoffmischung kann Glasfüllstoffe (z.B. Ba-AI-Silikatgläser, auch fluoridhaltig) und/oder Metall- und Nichtmetalloxide und deren Mischoxide enthalten.

Der Photoinitator ist vorzugsweise Campherchinon oder Bis- oder Trisacylphosphinoxid.

Die Pigmente sind vorzugsweise in der Dentalindustrie verwendete Pigmente wie z.B. Eisenoxide, Chrom-Eisen-Zink-Spinelle, Titandioxid, Kupfer-Chrom-Eisen-Spinelle, Cobalt-Aluminium-Spinelle und Zirkonoxide.

Weitere Ausgestaltungen der Erfindung sind sog. Farbkits, das sind Zusammenstellungen von Einzelkomponenten, mit denen das erfindungsgemäße Verfahren durchgeführt werden kann. Vorzugsweise sind dort auch die geeigneten Farbschlüssel, Anleitungen und Werkzeuge enthalten. Insbsondere ist es möglich, Korrekturfarben für Vita shades A, B, C, D getrennt und Korrekturfarben in Richtung blau, gelb oder weiß getrennt anzubieten, jeweils vorzugsweise mit Transparentlack und Schwarzlack.

Die Erfindung betrifft somit auch ein Farbkit zur Farbkorrektur von Zahnersatz oder Zahnoberflächen, umfassend folgende Komponenten:
1 Korrekturfarbe für die Vita Zahngrundfarben A,
1 Korrekturfarbe für die Vita Zahngrundfarben B,
1 Korrekturfarbe für die Vita Zahngrundfarben C,
1 Korrekturfarbe für die Vita Zahngrundfarben D,
1 transparenter Verdünnungslack zum Abstimmen der Farbintensität sowie optional
1 schwarze Korrekturfarbe zur Individualisierung der Vita Zahngrundfarben bezüglich Helligkeit; des weiteren ein
   Farbkit zur Farbkorrektur von Zahnersatz oder Zahnoberflächen, umfassend folgende Komponenten:
1 orange Korrekturfarbe zur Individualisierung der Vita Zahngrundfarben im rot/gelben Farbbereich,
1 blaue Korrekturfarbe zur Individualisierung der Vita Zahngrundfarben im blau/grünen Farbbereich,
1 weiße Korrekturfarbe zur Individualisierung der Vita Zahngrundfarben Helligkeit und Transparenz,
1 transparenter Verdünnungslack zum Abstimmen der Farbintensität sowie optional
1 schwarze Korrekturfarbe zur Individualisierung der Vita Zahngrundfarben bezüglich Helligkeit; und zusätzlich
   ein zusammengefasstes Farbkit zur Farbkorrektur von Zahnersatz oder Zahnoberflächen, umfassend folgende Komponenten:
1 Korrekturfarbe für die Vita Zahngrundfarben A,
1 Korrekturfarbe für die Vita Zahngrundfarben B,
1 Korrekturfarbe für die Vita Zahngrundfarben C,
1 Korrekturfarbe für die Vita Zahngrundfarben D,
1 orange Korrekturfarbe zur Individualisierung der Vita Zahngrundfarben im rot/gelben Farbbereich,
1 blaue Korrekturfarbe zur Individualisierung der Vita Zahngrundfarben im blau/grünen Farbbereich,
1 weiße Korrekturfarbe zur Individualisierung der Vita Zahngrundfarben Helligkeit und Transparenz,
1 transparenter Verdünnungslack zum Abstimmen der Farbintensität sowie optional
1 schwarze Korrekturfarbe zur Individualisierung der Vita Zahngrundfarben bezüglich Helligkeit.

Dazu können jeweils Farbschlüssel Mischanleitung und Erläuterung der Korrekturmöglichkeiten sowie geeignetes Werkzeug wie Mischplatte, Messpipette, Pinsel, kommen.

Das erfindungsgemäße Verfahren zur Farbkorrektur kann in der Praxis beispielhaft in der folgend beschriebenen Weise zur Farbadaption von Komposit-Verblendkronen angewendet werden:
- Die Oberfläche der polymerisierten Verblendkrone wird mit einem Sandstrahler mittels Al₂O₃ Sand und einem Druck von 2 bar angeraut.
- Die Oberfläche wird mit einem Dampfstrahler gereinigt und folgend getrocknet.
- Eine Aktivierungsflüssigkeit wie c&b liquid (Fa. Heraeus Kulzer) wird mit einem Pinsel aufgetragen (Zusammensetzung: Dimethacrylate, mehrfunktionelle Methacrylsäureester, Haftsilan, Photoinitiatoren).
- Entsprechend der vorzunehmenden Farbkorrektur werden die benötigten Farben aus dem Kit der erfindungsgemäßen Farblacke ausgewählt, gegebenenfalls gemischt und entsprechend des gewünschten Farbeffektes mit einem Pinsel aufgetragen.
- Der erfindungsgemäße Farblack wird mit einem Polymerisationsgerät (z.B. Heraflash, Fa. Heraeus Kulzer) auspolymerisiert.
- Die Oberfläche der farbkorrigierten Verblendkrone wird zur Erzielung eines hohen Glanzes ggf. mit geeigneten Poliersystemen poliert (z.B. Prepol und Hipol, Fa. Heraeus Kulzer).

Dieses prinzipielle Verfahren wird je nach Anwendungsbereich (z.B. Material der Oberfläche, intra- oder extraorale Anwendung) in Bezug auf die Oberflächenbehandlung der farblich zu korrigierenden Oberfläche, die Anbindung der Korrekturlacke und auf die zur Aushärtung verwendeten Geräte angepasst.

Bei der farblichen Individualisierung und Korrektur eines natürlichen Zahnes erfolgt die Anbindung z.B. über übliche Verfahren wie Ätzen und Bonden.

Bei der Korrektur von PMMA Prothesenzähnen eigenen sich andere Aktivierungslösungen (z.B. c&b connector, Fa. Heraeus Kulzer, ein lichthärtender Konditionierer zur Anbindung von lichthärtenden c&b-Verblendwerkstoffen an PMMA-Heiß- oder Kaltpolymerisate und Kunststoff-Prothesenzähne. Zusammensetzung: Methylmethacrylat, Polymethylmethacrylat, Urethandimethacrylat, Fotoinitiatoren.

Bei der Korrektur von Keramikoberflächen bieten sich z.B. übliche Silanisierungsmethoden an.

## Patentansprüche

1. Verfahren zur Farbkorrektur von Zahnersatz oder Zahnoberflächen durch Auftragen lichthärtender Korrekturfarben für die Zahngrundfarben.

2. Verfahren zur Farbkorrektur von Zahnersatz oder Zahnoberflächen durch Auftragen von mindestens einer von 4 lichthärtenden Korrekturfarben in Richtung orange, blau, schwarz und weiß.

3. Verfahren zur Farbkorrektur von Zahnersatz oder Zahnoberflächen durch Auftragen mindestens einer von 4 lichthärtenden Korrekturfarben für die Zahngrundfarben Vita A, B, C, und D.

4. Farbkit zur Farbkorrektur von Zahnersatz oder Zahnoberflächen, umfassend folgende Komponenten:
1 Korrekturfarbe für die Vita Zahngrundfarben A,
1 Korrekturfarbe für die Vita Zahngrundfarben B,
1 Korrekturfarbe für die Vita Zahngrundfarben C,
1 Korrekturfarbe für die Vita Zahngrundfarben D,
1 transparenter Verdünnungslack zum Abstimmen der Farbintensität sowie optional
1 schwarze Korrekturfarbe zur Individualisierung der Vita Zahngrundfarben bezüglich Helligkeit.

5. Farbkit zur Farbkorrektur von Zahnersatz oder Zahnoberflächen, umfassend folgende Komponenten:
1 orange Korrekturfarbe zur Individualisierung der Vita Zahngrundfarben im rot/gelben Farbbereich,
1 blaue Korrekturfarbe zur Individualisierung der Vita Zahngrundfarben im blau/grünen Farbbereich,
1 weiße Korrekturfarbe zur Individualisierung der Vita Zahngrundfarben Helligkeit und Transparenz,
1 transparenter Verdünnungslack zum Abstimmen der Farbintensität sowie optional
1 schwarze Korrekturfarbe zur Individualisierung der Vita Zahngrundfarben bezüglich Helligkeit.

6. Farbkit zur Farbkorrektur von Zahnersatz oder Zahnoberflächen, umfassend folgende Komponenten:
1 Korrekturfarbe für die Vita Zahngrundfarben A,
1 Korrekturfarbe für die Vita Zahngrundfarben B,
1 Korrekturfarbe für die Vita Zahngrundfarben C,
1 Korrekturfarbe für die Vita Zahngrundfarben D,
1 orange Korrekturfarbe zur Individualisierung der Vita Zahngrundfarben im rot/gelben Farbbereich,
1 blaue Korrekturfarbe zur Individualisierung der Vita Zahngrundfarben im blau/grünen Farbbereich,
1 weiße Korrekturfarbe zur Individualisierung der Vita Zahngrundfarben Helligkeit und Transparenz,
1 transparenter Verdünnungslack zum Abstimmen der Farbintensität sowie optional
1 schwarze Korrekturfarbe zur Individualisierung der Vita Zahngrundfarben bezüglich Helligkeit.

7. Verfahren nach einem der Ansprüche 1 bis 3, **dadurch gekennzeichnet, dass** die Korrekturfarben und der Verdünnunglack
(A) 40 - 60 Gew.% Matrixmonomer(e),
(B) 60 - 40 Gew.% Füllstoffmischung aus Quarz und/oder Quarz enthaltendem Splitterpolymer und/oder Metall- und/oder Nichtmetalloxiden und deren Mischoxiden und/oder Dentalglas,
(C) 0.1 - 1 Gew. % (Photo)Initiator und
(D) ggf. geringe Mengen Dentalpigmente enthalten.

8. Farbkit nach einem der Ansprüche 4 bis 6, **dadurch gekennzeichnet, dass** die Korrekturfarben und der Verdünnunglack
(A) 40 - 60 Gew.% Matrixmonomer(e),
(B) 60 - 40 Gew.% Füllstoffmischung aus Quarz und/oder Quarz enthaltendem Splitterpolymer und/oder Metall- und/oder Nichtmetalloxiden und deren Mischoxiden und/oder Dentalglas,
(C) 0.1 - 1 Gew. % (Photo)Initiator und
(D) ggf. geringe Mengen Dentalpigmente enthalten.
